(19) Europäisches Patentamt
European Patent Office
Office européen des brevets

(11) **EP 3 911 932 B1**

(12) **EUROPÄISCHE PATENTSCHRIFT**

(45) Veröffentlichungstag und Bekanntmachung des Hinweises auf die Patenterteilung:
**26.07.2023   Patentblatt 2023/30**

(21) Anmeldenummer: **19824257.0**

(22) Anmeldetag: **11.12.2019**

(51) Internationale Patentklassifikation (IPC):
**G01M 7/00** *(2006.01)*    **G01M 13/00** *(2019.01)*

(52) Gemeinsame Patentklassifikation (CPC):
**G01M 7/00; G01M 13/00**

(86) Internationale Anmeldenummer:
**PCT/EP2019/084613**

(87) Internationale Veröffentlichungsnummer:
**WO 2020/148027 (23.07.2020 Gazette 2020/30)**

(54) **VERFAHREN ZUM PRÜFEN VON BAUTEILEN, INSBESONDERE VON INJEKTOREN**

METHOD FOR CHECKING COMPONENTS, IN PARTICULAR INJECTORS

PROCÉDÉ POUR TESTER DES COMPOSANTS, NOTAMMENT DES INJECTEURS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.01.2019   DE 102019200610**

(43) Veröffentlichungstag der Anmeldung:
**24.11.2021   Patentblatt 2021/47**

(73) Patentinhaber: **Robert Bosch GmbH**
**70442 Stuttgart (DE)**

(72) Erfinder: **ENGLERT, Karl-Otto**
**74831 Gundelsheim (DE)**

(56) Entgegenhaltungen:
DE-A1- 10 137 364      DE-A1-102006 048 791
DE-A1-102007 032 064   GB-A- 2 254 425
RU-U1- 6 446           US-A1- 2015 185 069

EP 3 911 932 B1

## Beschreibung

Die Erfindung betrifft ein Verfahren zum Prüfen von Bauteilen, insbesondere von Injektoren, und ferner eine Vorrichtung, die insbesondere zur Durchführung eines derartigen Verfahrens dient.

Stand der Technik

Strukturelle Defekte wie beispielsweise nichtmetallische Einschlüsse im Gefüge von aus Stahl gebildeten Bauteilen können in Abhängigkeit von ihrer Lage und Größe die Funktionsfähigkeit der Bauteile im Betrieb beeinträchtigen und deren Lebenszyklus in beträchtlichen Maße verkürzen. Deshalb wird bei Stangenmaterial, das als Ausgangsmaterial für die Bauteilfertigung vorgesehen ist, stichprobenartig ein strukturanalytisches Verfahren wie beispielsweise die Computertomographie eingesetzt, um die Lage und Größe solcher Einschlüsse zu erfassen. Nachteilig dabei ist, dass beim Einsatz eines solchen Verfahrens ein beträchtlich hoher Zeitaufwand erforderlich ist und komplette Stangen als Ausschuss aus dem Fertigungsprozess entfernt werden, wenn durch ein derartiges Verfahren nichtmetallische Einschlüsse erkannt werden, so dass der Einsatz eines solchen Verfahrens mit hohen Kosten verbunden ist.

Bei einem anderen Verfahren, das ebenfalls bei Stangenmaterial zum Einsatz kommt und zur Defekterfassung dient, wird ein zu prüfendes Objekt in ein Tauchbad gesetzt und Ultraschallimpulsen ausgesetzt, um Defekte bzw. Einschlüsse im Stahlgefüge zu erfassen. Aus physikalischen Gründen zeigt das Verfahren bei der Detektion größerer Einschlüsse eine relativ geringe Zuverlässigkeit.

Relevanter Stand der Technik ist aus DE 101 37 364 A1, GB 2 254 425 A, DE 10 2006 048791 A1 und US 2015/185069 A1 bekannt.

Offenbarung der Erfindung

Vorteile der Erfindung

Das Verfahren mit den Merkmalen des Patentanspruchs 1 hat den Vorteil, dass eine schnelle und zuverlässige Beurteilung der Qualität von Bauteilen möglich ist. Dazu umfasst das Verfahren die Schritte des a) Messens von Schwingungsspektren einer Vielzahl von Referenzbauteilen unterschiedlicher Qualitätsstufen als Referenzspektren, wobei für jedes Referenzbauteil Frequenzlinien in den jeweiligen Referenzspektren und Ergebnisse aus strukturanalytischen Untersuchungen an den jeweiligen Referenzbauteilen jeweils einander zugeordnet werden, des b) Anregens von Schwingungen in einem zu prüfenden Bauteil, des c) Messens von in Reaktion auf Verfahrensschritt b) abgegebenen Schwingungen als Schwingungsspektrum, und des d) Vergleichens von Frequenzlinien aus dem gemäß Verfahrensschritt c) gemessenen Schwingungsspektrum des Bauteils mit entsprechenden Frequenzlinien aus den Referenzspektren der Referenzbauteile, um zumindest ein Referenzspektrum zu ermitteln, das sich hinsichtlich von Amplituden der Frequenzlinien am wenigsten von dem Schwingungsspektrum des Bauteils unterscheidet, und anhand der dem zumindest einen Referenzspektrum zugeordneten Ergebnisse der strukturanalytischen Untersuchungen das Bauteil bezüglich Lage und/oder Größe von Defekten zu klassifizieren.

Der Grundgedanke der Erfindung besteht mithin darin, in einer ersten Phase Referenzbauteile, die der Bauart des zu prüfenden Bauteils zugehören, mit zwei unabhängig voneinander operierenden und physikalisch unterschiedlich arbeitenden Messmethoden zu charakterisieren und deren jeweilige Ergebnisse aufgrund empirischer Untersuchungen miteinander zu verknüpfen und in einer zweiten Phase, welche die Verfahrensschritte b) bis d) umfasst und als Prüfphase getrennt von der ersten Phase abläuft, die Bauteilprüfung stattfindet, indem ein Zugriff auf die in der vorangegangenen ersten Phase gewonnene Datensammlung erfolgt, um - durch Vergleichen des in der Prüfphase gerade gemessenen Schwingungsspektrums des zu prüfenden Bauteils mit den Referenzspektren der Referenzbauteile - zumindest ein Referenzbauteil zu ermitteln, dessen Referenzspektrum dem Schwingungsspektrum des zu prüfenden Bauteils hinsichtlich der Frequenzlinien am nächsten kommt; da die Informationen über Lage und/oder Größe von Defekten bzw. Einschlüssen aus den strukturanalytischen Untersuchungen dieses Referenzbauteils mit dem Auftreten einzelner oder mehrerer Frequenzlinien im entsprechenden Referenzspektrum der Datensammlung verknüpft sind, dient dies als ein Maß für die für die Klassifizierung des zu prüfenden Bauteils in Kategorien von "gut" oder "schlecht" und mithin für die Lage und/oder Größe von Defekten im zu prüfenden Bauteil. Solche Defekte können als nichtmetallische Einschlüsse oder als während des Fertigungsprozesses entstandene Bearbeitungsfehler vorliegen. Das der Klassifizierung zugrundeliegende Maß ist umso genauer, je größer die Anzahl der in der Datensammlung erfassten Referenzbauteile und der Qualitätsstufen sind.

Eine bevorzugte und vorteilhafte Ausgestaltung des erfindungsgemäßen Verfahrens besteht in e) vielfachem Wiederholen der Verfahrensschritte b) bis d) entsprechend einer Anzahl von in einer Serie zu prüfenden Bauteilen. Dadurch ist das erfindungsgemäße Verfahren zum Einsatz in einer Fertigungslinie geeignet, in welcher die Prüfphase wiederholt abläuft. Im Unterschied zu herkömmlichen Verfahren, mit denen Stangenmaterial am Anfang der Fertigungskette überprüft wird, ist es mit dem erfindungsgemäßen Verfahren möglich, Bauteile, die in der Fertigungslinie am Ende der Produktionsprozesses angelangt sind, auf Defekte hin zu überprüfen.

Gemäß der beanspruchten Erfindung werden gemäß Schritt d) die jeweiligen Differenzen der Amplituden von einander entsprechenden Frequenzlinien einerseits des Schwingungsspektrums des Bauteils und andererseits der Referenzspektren der Referenzbauteile gebildet, um anhand der jeweiligen Abweichungen den als Maß für die Klassifizierung dienenden Übereinstimmungsgrad zwischen Schwingungsspektrum des Bauteils und dem Referenzspektrum des nächstkommenden Referenzbauteils auswerten zu können.

Zweckmäßigerweise werden die Schwingungsspektren in einem Frequenzbereich erfasst, der sich bis etwa 80 kHz erstreckt. Erfahrungsgemäß deckt dieser Frequenzbereich die Eigenfrequenzen von Injektoren unterschiedlicher Bauarten ab.

Eine zweckmäßige und messtechnisch einfach zu realisierende Weiterbildung der Erfindung kann darin bestehen, dass die Frequenzlinien im jeweiligen Schwingungsspektrum anhand ihres jeweiligen Signal-zu-Rausch-Verhältnisses gegenüber dem Rauschuntergrund identifiziert werden.

Um sowohl die Lage als auch die Größe von Defekten in der Mikrostruktur von als Referenz vorgesehenen Bauteilen präzise erfassen zu können, ist gemäß einer bevorzugten Ausgestaltung der Erfindung vorgesehen, dass die strukturanalytischen Untersuchungen an der Vielzahl von Referenzbauteilen mittels Computertomographie erfolgen.

Zum seriellen Prüfen von Bauteilen in einer Fertigungslinie ist es zweckmäßig, wenn die gemäß Schritt a) gemessenen Referenzspektren der Vielzahl von Referenzbauteilen zusammen mit den jeweils zugeordneten Ergebnissen der strukturanalytischen Untersuchungen als Referenzdatensätze in einer Referenzdatenbank gespeichert werden.

Bei einer Vorrichtung nach Anspruch 7, die insbesondere zur Durchführung eines derartigen Verfahrens dient, sind eine Impulsgebereinrichtung zur Schwingungsanregung eines zu prüfenden Bauteils, eine Detektionseinrichtung zum Detektieren von von dem Bauteil abgegebenen Schwingungen und eine Steuer- und Auswerteeinrichtung zum Analysieren und Auswerten der detektierten Schwingungen vorgesehen, wobei die Steuer- und Auswerteeinrichtung bei der Auswertung auf eine Datenbank mit Referenzdatensätzen von Referenzbauteilen zugreift, wobei eine Vergleichseinheit Frequenzlinien aus dem gemessenen Schwingungsspektrum des Bauteils mit entsprechenden Frequenzlinien aus den Referenzspektren der Referenzbauteile vergleicht, wobei eine Entscheidungseinheit wenigstens ein Referenzspektrum auswählt, das sich hinsichtlich von Amplituden der Frequenzlinien am wenigsten von dem Schwingungsspektrum des Bauteils unterscheidet, wobei eine Zuordnungseinheit dem ausgewählten Referenzspektrum Ergebnisse von strukturanalytischen Untersuchungen des entsprechenden Referenzbauteils zuordnet, und wobei eine Klassifizierungseinheit anhand der dem ausgewählten Referenzspektrum zugeordneten Ergebnisse der strukturanalytischen Untersuchungen des entsprechenden Referenzbauteils das Bauteil bezüglich Lage und/oder Größe von Defekten klassifiziert.

Dabei steht die Steuer- und Auswerteeinrichtung über eine Signal- und/oder Datenleitung mit der Detektionseinrichtung in Verbindung, um die von der Detektionseinrichtung erfassten Messsignale verarbeiten zu können.

Zur Ansteuerung der Impulsgebereinrichtung steht die Steuer- und Auswerteeinrichtung über eine Steuerleitung mit der Impulsgebereinrichtung in Verbindung.

Zum Erfassen der Schwingungen im relevanten akustischen Frequenzbereich ist die Detektionseinrichtung als Mikrofon ausgebildet.

Um die von der Detektionseinrichtung gelieferten Signale spektral auszuwerten, ist vorgesehen, dass die Steuer- und Auswerteeinrichtung eingangsseitig einen Spektralanalysator aufweist.

Eine zweckmäßige Ausführungsform der Erfindung, die einen automatisierten Betrieb ermöglicht, sieht vor, dass die Steuer- und Auswerteeinrichtung einen Prozessrechner aufweist, in dessen Speicherbereich die Datenbank mit den Referenzdatensätzen der Referenzbauteile implementiert ist.

Weitere vorteilhafte Weiterbildungen und Ausgestaltungen der Erfindung ergeben sich durch die in den Unteransprüchen aufgeführten Maßnahmen.

Kurze Beschreibung der Zeichnungen

Ausführungsbeispiele der Erfindung sind in der nachfolgenden Beschreibung und in den beigefügten Zeichnungen näher erläutert. Letztere zeigen in schematisch gehaltenen Ansichten:

Fig. 1 ein Blockschema einer Prüfvorrichtung, welche eine Einrichtung zum Erregen von Schwingungen in einem zu prüfenden Bauteil, ein Mikrofon zur Detektion des Antwortverhaltens des prüfenden Bauteils und eine Auswerteeinheit aufweist,

Fig. 2 ein mittels der Prüfvorrichtung von Fig. 1 aufgezeichnetes Resonanzspektrum mit aus dem Rauschuntergrund herausstehenden Frequenzlinien bzw. Eigenfrequenzen eines zu prüfenden Bauteils, wobei der jeweilige Schalldruckpegel in Abhängigkeit von der Frequenz aufgetragen ist,

Fig. 3A ein Flussdiagramm mit wesentlichen Verfahrensschritten des erfindungsgemäßen Prüfverfahrens, und

Fig. 3B ein Flussdiagramm mit den wesentlichen Verfahrensschritten zum Erstellen einer Referenzdatenbank für das Prüfverfahren.

Ausführungsformen der Erfindung

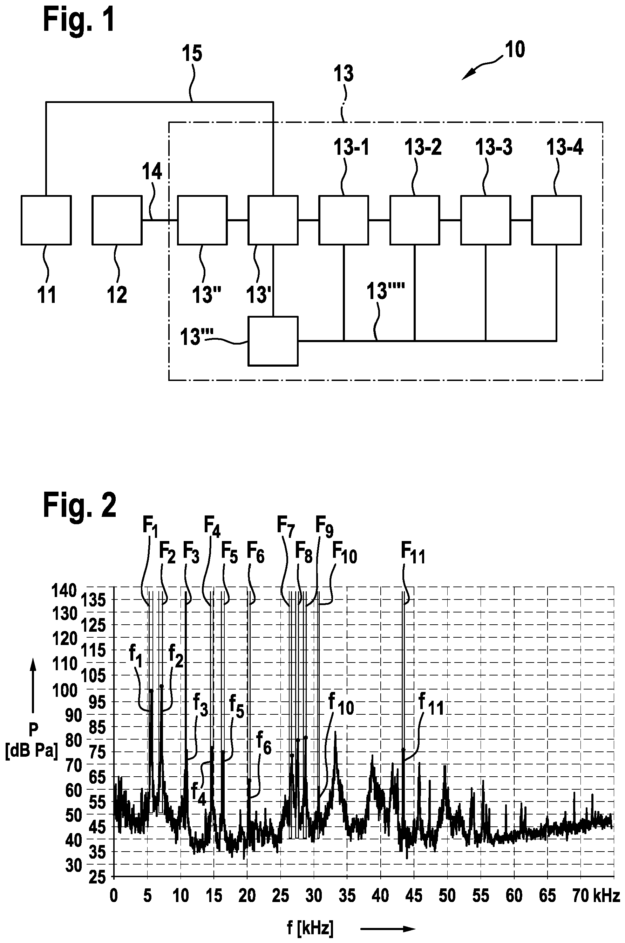

Fig. 1 zeigt in einem Blockschema die im Ganzen mit 10 bezeichnete Prüfvorrichtung, die eine mechanische Impulsgebereinrichtung 11 zum Anregen von Schwingungen in einem jeweils zu prüfenden Bauteil, eine im Ausführungsbeispiel als Mikrofon ausgebildete Detektionseinrichtung 12 zum Erfassen des akustischen Antwortverhaltens des zu prüfenden Bauteils und eine Steuer- und Auswerteeinrichtung 13, die im Ausführungsbeispiel als Prozessrechner 13' mit vorgeschaltetem Spektralanalysator 13" ausgebildet ist, wobei der Prozessrechner 13' eine Datenbank 13''' mit darin abgespeicherten Referenzdatensätzen von Referenzbauteilen aufweist. Die Impulsgebereinrichtung 11 erteilt mittels eines metallischen Stößels (nicht dargestellt) dem zu prüfenden Bauteil einen kurzen mechanischen Impuls bzw. Schlag. Die in Reaktion darauf vom Bauteil ausgehenden akustischen Schwingungen werden von dem Mikrofon 12 erfasst, in elektrische Signale umgesetzt und über eine Signal- und/oder Datenleitung 14 an die Steuer- und Auswerteeinrichtung 13 übertragen. In dem Spektralanalysator 13" werden die Signale spektral analysiert und als Resonanzspektrum im Prozessrechner 13' ausgewertet, wobei die Auswertung im Hinblick auf Frequenzlinien erfolgt, die mit jenen aus den Referenzdatensätzen verglichen werden, um das zu prüfende Bauteil strukturell charakterisieren und klassifizieren zu können.

Dazu umfasst die Steuer- und Auswerteeinrichtung 13 eine Vergleichseinheit 13-1, eine Entscheidungseinheit 13-2, eine Zuordnungseinheit 13-3 und eine Klassifizierungseinheit 13-4, wobei die Vergleichseinheit 13-1 Frequenzlinien aus dem gemessenen Schwingungsspektrum des Bauteils mit entsprechenden Frequenzlinien aus den Referenzspektren der Referenzbauteile vergleicht, die Entscheidungseinheit 13-2 wenigstens ein Referenzspektrum auswählt, das sich hinsichtlich von Amplituden der Frequenzlinien am wenigsten von dem Schwingungsspektrum des Bauteils unterscheidet, die Zuordnungseinheit 13-3 dem ausgewählten Referenzspektrum Ergebnisse von strukturanalytischen Untersuchungen des entsprechenden Referenzbauteils zuordnet, und die Klassifizierungseinheit 13-4 anhand der dem ausgewählten Referenzspektrum zugeordneten Ergebnisse der strukturanalytischen Untersuchungen des entsprechenden Referenzbauteils das Bauteil bezüglich Lage und/oder Größe von Defekten klassifiziert.

Die Vergleichseinheit 13-1, die Entscheidungseinheit 13-2, die Zuordnungseinheit 13-3 und die Klassifizierungseinheit 13-4 stehen miteinander und mit der Datenbank 13''' über Kommunikationspfade 13'''' in Kommunikationsverbindung.

Die Steuer- und Auswerteeinrichtung 13 ist über eine elektrische Steuerleitung 15 mit der mechanischen Impulsgebereinrichtung 11 elektrisch verbunden, um über die Steuerleitung 15 Steuersignale an die Impulsgebereinrichtung 11 zu senden, die in Reaktion darauf den Stößel gegen das zu prüfende Bauteil schlagen lässt.

Fig. 2 zeigt ein - mit der Vorrichtung 10 erfasstes - Resonanzspektrum 100 eines mit dem erfindungsgemäßen Verfahren geprüften Injektors als typisches Bauteil, wobei entlang der Abszisse die Frequenz f in kHz aufgetragen ist, während entlang der Ordinate der Schalldruck in dB Pa dargestellt ist. Im Resonanzspektrum 100 des Injektors sind - mittels der Auswerteeinrichtung - Frequenzlinien $f_1$ bis $f_{11}$ identifiziert, da sie signifikant aus dem Rauschuntergrund herausragen. Diese Frequenzlinien sind Eigenfrequenzen bzw. charakteristische Frequenzen des Bauteils. Um die identifizierten Frequenzlinien auszuwerten, werden die Frequenzlinien $f_1$ bis $f_{11}$ im Resonanzspektrum des jeweiligen Prüflings mit den dazu korrespondierenden Frequenzlinien im Resonanzspektrum eines Referenzbauteils desselben Bauteiltyps im Hinblick auf die jeweiligen Amplituden $I_1$ bis $I_{11}$ verglichen. Dazu werden die Resonanzspektren so übereinandergelegt bzw. übereinanderprojiziert, dass die miteinander korrespondierenden Frequenzlinien in frequenzmäßig eng toleriert ausgelegte Rahmen $F_1$ bis $F_{11}$ passen, die dazu dienen, die Differenzen der Amplituden bei einer jeweiligen Frequenzlinie $f_i$ im jeweiligen Rahmen $F_i$ (i = 1 bis N) zu erfassen und zwar für alle i = 1 bis N, wobei N = 11 im vorliegenden Fall, d.h. für einen bestimmten Bauteiltyp, ist.

Die Lage und die Anzahl der in einem Resonanzspektrum auftretenden Eigenfrequenzen bzw. Frequenzlinien sind abhängig von der Bauart eines Bauteils.

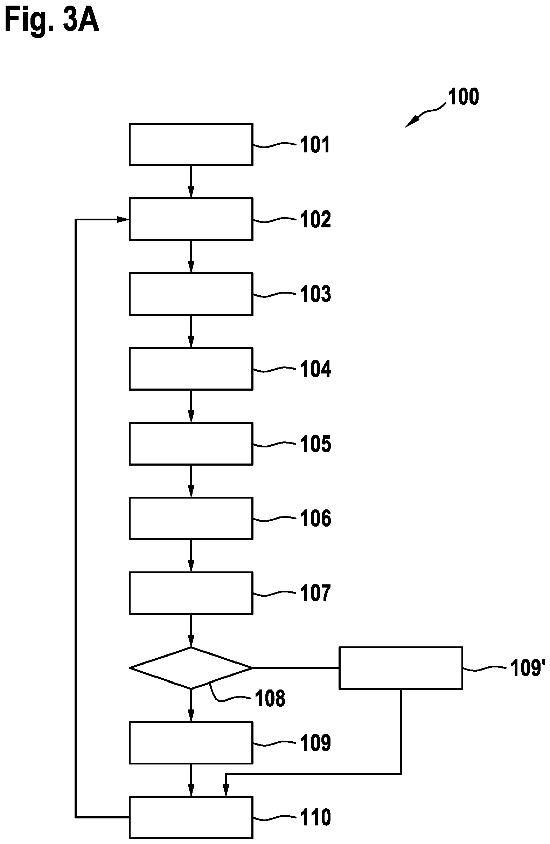

Fig. 3A zeigt ein Flussdiagramm 100 mit den wesentlichen Verfahrenschritten des erfindungsgemäßen Prüfverfahrens. In einem als Lernphase dienenden Verfahrensschritt 101 werden bei einer Vielzahl von Referenzbauteilen unterschiedlicher Qualitätsstufen Messungen durchgeführt, um einerseits Resonanzspektren aufzunehmen und andererseits Strukturanalyseuntersuchungen mittels Computertomographie zu erstellen, wobei die Ergebnisse der Strukturanalysen für jedes Referenzbauteil den charakteristischen Frequenzlinien der jeweiligen Resonanzspektren empirisch zugeordnet werden; die Messungen und ihre Zuordnungen werden in einer Datenbank abgelegt, so dass die Lernphase beendet ist. In einem Verfahrensschritt 102, mit dem die eigentliche Prüfphase beginnt, wird ein jeweiliger Prüfling zu akustischen Schwingungen angeregt, worauf in einem daran anschließenden Verfahrensschritt 103 die von dem Prüfling daraufhin abgegebenen Schwingungen als Resonanzspektrum erfasst und aufgezeichnet werden. Im Ausführungsbeispiel erfolgt die Erfassung und Aufzeichnung in einem Frequenzbereich, der sich von 0 bis etwa 80 kHz erstreckt. Die charakteristischen Frequenzlinien bzw. Eigenfrequenzen $f_i$ (i = 1 bis N) werden dann gemäß einem Verfahrensschritt 104 identifiziert und deren Amplituden $l_i$ ($f_i$) erfasst und gespeichert. Danach wird in einem Verfahrensschritt 105 die Datenbank mit darin abgespeicherten Referenzspektren von qualitativ unterschiedlichen Referenzbauteilen desselben Bauteiltyps aufgerufen, wobei das Resonanzspektrum des Prüflings nacheinander mit den einzelnen Referenzspektren im Hinblick auf die charakteristischen Frequenzlinien und deren Amplituden verglichen wird, wobei, gemäß der beanspruchten Erfindung, dieser Vergleich für die charakteristischen Frequenzlinien in jedem der Referenzspektren durch eine jeweilige Differenzbildung der Amplituden erfolgt, also gemäß der nachstehenden Gleichung

$$\Delta_{ij} = \left( I_i - I_i \left( REF(j) \right) \right),$$

wobei mit $\Delta_{ij}$ die jeweilige Amplitudenabweichung für die Amplitude $I_i$ einer i-ten Frequenzlinie im Resonanzspektrum des Prüflings im Vergleich zur Amplitude $I_i(REF(j))$ der dazu korrespondierenden i-ten Frequenzlinie in einem j-ten Referenzspektrum REF(j) bezeichnet ist.

In einem daran anschließenden Schritt 106 werden aufgrund der jeweiligen Amplitudenabweichungen $\Delta_{ij}$ das dem Prüfling nächstkommende Referenzbauteil ermittelt, das die geringsten Amplitudenabweichungen der einzelnen Frequenzlinien im zugeordneten Referenzspektrum aufweist. Daraufhin erfolgt in einem Verfahrensschritt 107 eine Klassifizierung des Prüflings, wobei diesem diejenige Qualitätsstufe zugewiesen wird, welche das ihm nächstkommende Referenzbauteil aufweist; da die in der Datenbank enthaltenen und aus den strukturanalytischen Untersuchungen dieses Referenzbauteils gewonnenen Informationen über Lage und/oder Größe von Defekten mit dem Auftreten einzelner oder mehrerer Frequenzlinien und deren Intensitäten bzw. Amplituden im entsprechenden Referenzspektrum verknüpft sind, bilden sich - bei hohem Übereinstimmungsgrad der beiden im Vergleich zueinander stehenden Spektren hinsichtlich der Amplituden von miteinander korrespondierenden Frequenzlinien - die strukturellen Informationen über Lage und Größe der Defekte im nächstkommenden Referenzbauteil aufgrund empirischer Untersuchungen auf die strukturelle Situation im zu prüfenden Bauteil ab und dienen in Abhängigkeit vom Übereinstimmungsgrad als Maß für die Klassifizierung des zu prüfenden Bauteils in Kategorien von "gut" oder "schlecht" und mithin für die Lage und/oder Größe der Defekte bzw. Einschlüsse im zu prüfenden Bauteil.

In einem danach erfolgenden Verfahrensschritt 108 wird geprüft, ob die für den Prüfling ermittelte Qualitätsstufe besser als ein vorbestimmtes Qualitätsniveau ist. Bei einem positiven Prüfresultat wird der Prüfling in einem nächsten Verfahrensschritt 109 als "gut" eingestuft, worauf in einem daran anschließenden Schritt 110 ein Rücksprung zu Schritt 102 erfolgt, um den nächsten Prüfling in der Fertigungslinie zu prozessieren bzw. zu messen. Bei einem negativen Prüfresultat in Schritt 108 wird der Prüfling in einem Schritt 109' als "schlecht" eingestuft und aus der Fertigungslinie ausgesondert, worauf in dem daraufhin erfolgenden Schritt 110 ein Rücksprung zu Schritt 102 erfolgt, um den nächsten Prüfling in der Fertigungslinie zu prozessieren.

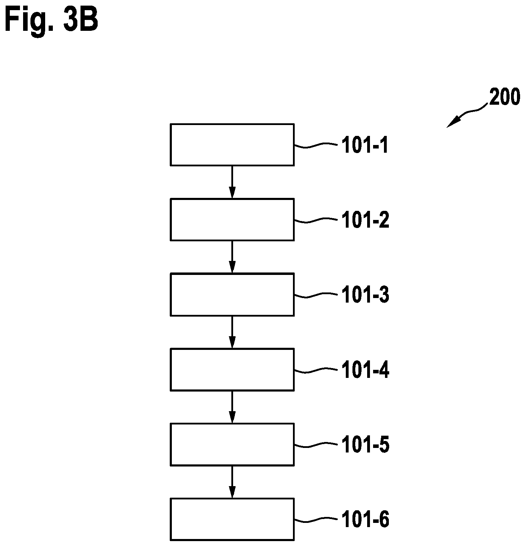

Fig. 3B zeigt ein Flussdiagramm 200, das den in Fig. 3A dargestellten Verfahrensschritt 101 in seine Einzelschritte 101-1 bis 101-6 aufgliedert, die zur Erstellung der Datenbank für die Referenzbauteile dienen. In einem ersten Verfahrensschritt 101-1 wird die Datenbank angelegt. In einem weiteren Verfahrensschritt 101-2 werden die Resonanzspektren als Referenzspektren einer Vielzahl von Referenzbauteilen unterschiedlicher Qualitätsstufen eines Bauteiltyps erfasst und aufgezeichnet. Dann werden in einem daran anschließenden Verfahrensschritt 101-3 die charakteristischen Frequenzlinien in den aufgezeichneten Referenzspektren identifiziert und deren jeweilige Amplituden bzw. Intensitäten erfasst. In einem anschließenden Verfahrensschritt 101-4 erfolgt eine Charakterisierung der Referenzbauteile mittels Strukturanalyse, vorzugsweise durch Computertomographie (CT), im Hinblick auf Lage und/oder Größe von Defekten bzw. Einschlüssen im jeweiligen Referenzbauteil. Danach erfolgt gemäß einem Schritt 101-5 eine Verknüpfung der Lage und/oder Größe der Defekte in dem jeweiligen Referenzbauteil mit einer einzelnen Frequenzlinie oder mehreren Frequenzlinien in dem jeweils zugeordneten Referenzspektrum auf der Grundlage empirischer Untersuchungen, worauf in einem abschließenden Verfahrensschritt 105-6 diese Zuordnung in dem dem jeweiligen Referenzbauteil zugeordneten Datenfeld innerhalb der Referenzdatenbank 13‴ der Steuer- und Auswerteeinrichtung 13 abgespeichert wird.

## Patentansprüche

1. Verfahren zum Prüfen von Bauteilen, insbesondere von Injektoren, mit folgenden Verfahrensschritten:

a) Messen von Schwingungsspektren einer Vielzahl von Referenzbauteilen unterschiedlicher Qualitätsstufen als Referenzspektren, wobei für jedes Referenzbauteil Frequenzlinien in den jeweiligen Referenzspektren und Ergebnisse aus strukturanalytischen Untersuchungen an den jeweiligen Referenzbauteilen jeweils einander zugeordnet werden,
b) Anregen (102) von Schwingungen in einem zu prüfenden Bauteil,
c) Messen (103) von in Reaktion auf Verfahrensschritt b) abgegebenen Schwingungen als Schwingungsspektrum, und
d) Vergleichen (105) von Frequenzlinien aus dem gemäß Verfahrensschritt c) gemessenen Schwingungsspektrum des Bauteils mit entsprechenden Frequenzlinien aus den Referenzspektren der Referenzbauteile, um zumindest ein Referenzspektrum zu ermitteln, das sich hinsichtlich von Amplituden der Frequenzlinien am wenigsten von dem Schwingungsspektrum des Bauteils unterscheidet, und anhand der dem zumindest einen Referenzspektrum zugeordneten Ergebnisse der strukturanalytischen Untersuchungen das Bauteil bezüglich Lage und/oder Größe von Defekten zu klassifizieren, **dadurch**

**gekennzeichnet, dass** zum Vergleichen gemäß Schritt d) die jeweiligen Differenzen der Amplituden von einander entsprechenden Frequenzlinien einerseits des Schwingungsspektrums des Bauteils und andererseits der Referenzspektren der Referenzbauteile gebildet werden.

2. Verfahren nach Anspruch 1, **gekennzeichnet durch** e) vielfaches Wiederholen der Verfahrensschritte b) bis d) entsprechend einer Anzahl von in einer Serie zu prüfenden Bauteilen.

3. Verfahren nach einem der Ansprüche 1 bis 2, **dadurch gekennzeichnet, dass** die Schwingungsspektren in einem Frequenzbereich erfasst werden, der sich bis etwa 80 kHz erstreckt.

4. Verfahren nach einem der Ansprüche 1 bis 3, **dadurch gekennzeichnet, dass** die Frequenzlinien im jeweiligen Schwingungsspektrum anhand ihres jeweiligen Signal-zu-Rausch-Verhältnisses gegenüber dem Rauschuntergrund identifiziert werden.

5. Verfahren nach einem der vorstehenden Ansprüche, **dadurch gekennzeichnet, dass** die strukturanalytischen Untersuchungen an der Vielzahl von Referenzbauteilen mittels Computertomographie erfolgen.

6. Verfahren nach einem der vorstehenden Ansprüche, **dadurch gekennzeichnet, dass** die gemäß Schritt a) gemessenen Referenzspektren der Vielzahl von Referenzbauteilen zusammen mit den jeweils zugeordneten Ergebnissen der strukturanalytischen Untersuchungen als Referenzdatensätze in einer Referenzdatenbank gespeichert werden.

7. Vorrichtung insbesondere zur Durchführung des Verfahrens nach einem der vorstehenden Ansprüche 1 bis 6, wobei eine Impulsgebereinrichtung (11) zur Schwingungsanregung eines zu prüfenden Bauteils, eine Detektionseinrichtung (12) zum Detektieren von von dem Bauteil abgegebenen Schwingungen und eine Steuer- und Auswerteeinrichtung (13) zum Analysieren und Auswerten der detektierten Schwingungen vorgesehen sind, wobei die Steuer- und Auswerteeinrichtung (13) bei der Auswertung auf eine Datenbank (13‴) mit Referenzdatensätzen von Referenzbauteilen zugreift,

wobei eine Vergleichseinheit (13-1) Frequenzlinien aus dem gemessenen Schwingungsspektrum des Bauteils mit entsprechenden Frequenzlinien aus den Referenzspektren der Referenzbauteile vergleicht,
wobei eine Entscheidungseinheit (13-2) wenigstens ein Referenzspektrum auswählt, das sich hinsichtlich von Amplituden der Frequenzlinien am wenigsten von dem Schwingungsspektrum des Bauteils unterscheidet,
wobei eine Zuordnungseinheit (13-3) dem ausgewählten Referenzspektrum Ergebnisse von strukturanalytischen Untersuchungen des entsprechenden Referenzbauteils zuordnet,
wobei eine Klassifizierungseinheit (13-4) anhand der dem ausgewählten Referenzspektrum zugeordneten Ergebnisse der strukturanalytischen Untersuchungen des entsprechenden Referenzbauteils das Bauteil bezüglich Lage und/oder Größe von Defekten klassifiziert, **dadurch gekennzeichnet, dass** zum Vergleichen die jeweiligen Differenzen der Amplituden von einander entsprechenden Frequenzlinien einerseits des Schwingungsspektrums des Bauteils und andererseits der Referenzspektren der Referenzbauteile gebildet werden.

8. Vorrichtung nach Anspruch 7, **dadurch gekennzeichnet, dass** die Steuer- und Auswerteeinrichtung (13) über eine Signal- und/oder Datenleitung (14) mit der Detektionseinrichtung (12) in Verbindung steht.

9. Vorrichtung nach Anspruch 7 oder 8, **dadurch gekennzeichnet, dass** die Steuer- und Auswerteeinrichtung (13) über eine Steuerleitung (15) mit der Impulsgebereinrichtung (11) in Verbindung steht.

10. Vorrichtung nach einem der Ansprüche 7 bis 9, **dadurch gekennzeichnet, dass** die Detektionseinrichtung (12) als Mikrofon ausgebildet ist.

11. Vorrichtung nach einem der Ansprüche 7 bis 10, **dadurch gekennzeichnet, dass** die Steuer- und Auswerteeinrichtung (13) eingangsseitig einen Spektralanalysator (13") aufweist.

12. Vorrichtung nach einem der Ansprüche 7 bis 11, **dadurch gekennzeichnet, dass** die Steuer- und Auswerteeinrichtung (13) einen Prozessrechner (13') aufweist, in dessen Speicherbereich die Datenbank (13‴) mit den Referenzdatensätzen der Referenzbauteile implementiert ist.

**Claims**

1. Method for testing components, in particular injectors, having the following method steps:

a) measuring vibration spectra for a multiplicity of reference components of different quality levels as reference spectra, wherein, for each reference component, frequency lines in the respective reference spectra and results from structure-analytical studies on the respective reference components are each associated with one another,

b) exciting (102) vibrations in a component to be tested,

c) measuring (103) vibrations produced in response to method step b) as a vibration spectrum, and

d) comparing (105) frequency lines from the vibration spectrum of the component that was measured in method step c) with corresponding frequency lines from the reference spectra of the reference components in order to determine at least one reference spectrum that differs least from the vibration spectrum of the component in terms of amplitudes of the frequency lines, and to classify the component in respect of position and/or size of defects on the basis of the results of the structure-analytical studies that are associated with the at least one reference spectrum, **characterized in that** the comparison in step d) involves forming the respective differences between the amplitudes of mutually corresponding frequency lines in the vibration spectrum of the component, on the one hand, and in the reference spectra of the reference components, on the other.

2. Method according to Claim 1, **characterized by** e) repeating method steps b) to d) multiple times in accordance with a number of components to be tested in a series.

3. Method according to either of Claims 1 and 2, **characterized in that** the vibration spectra are detected in a frequency range that extends up to approximately 80 kHz.

4. Method according to one of Claims 1 to 3, **characterized in that** the frequency lines in the respective vibration spectrum are identified on the basis of their respective signal-to-noise ratio in relation to the background noise.

5. Method according to one of the preceding claims, **characterized in that** the structure-analytical studies are carried out on the multiplicity of reference components by means of computed tomography.

6. Method according to one of the preceding claims, **characterized in that** the reference spectra measured in step a) for the multiplicity of reference components are stored in a reference database together with the respective associated results of the structure-analytical studies as reference datasets.

7. Apparatus in particular for performing the method according to one of the preceding Claims 1 to 6, wherein there is provision for a pulse generator device (11) for exciting vibrations in a component to be tested, a detection device (12) for detecting vibrations produced by the component and a control and evaluation device (13) for analysing and evaluating the detected vibrations, wherein, during evaluation, the control and evaluation device (13) accesses a database (13‴) containing reference datasets of reference components,

wherein a comparison unit (13-1) compares frequency lines from the measured vibration spectrum of the component with corresponding frequency lines from the reference spectra of the reference components,

wherein a decision unit (13-2) selects at least one reference spectrum that differs least from the vibration spectrum of the component in terms of amplitudes of the frequency lines,

wherein an association unit (13-3) associates results of structure-analytical studies of the applicable reference component with the selected reference spectrum,

wherein a classification unit (13-4) classifies the component in respect of position and/or size of defects on the basis of the results of the structure-analytical studies on the applicable reference component that are associated with the selected reference spectrum, **characterized in that** the comparison involves forming the respective differences between the amplitudes of mutually corresponding frequency lines in the vibration spectrum of the component, on the one hand, and in the reference spectra of the reference components, on the other.

8. Apparatus according to Claim 7, **characterized in that** the control and evaluation device (13) is connected to the detection device (12) by way of a signal and/or data line (14).

9. Apparatus according to Claim 7 or 8, **characterized in that** the control and evaluation device (13) is connected to the pulse generator device (11) by way of a control line (15).

10. Apparatus according to one of Claims 7 to 9, **characterized in that** the detection device (12) is in the form of a microphone.

11. Apparatus according to one of Claims 7 to 10, **characterized in that** the control and evaluation device (13) has a spectrum analyser (13'') on the input side.

12. Apparatus according to one of Claims 7 to 11, **characterized in that** the control and evaluation device (13) has a process computer (13'), in whose memory area the database (13‴) containing the reference datasets of the reference components is implemented.

## Revendications

1. Procédé permettant de tester des composants, en particulier des injecteurs, comprenant les étapes de procédé suivantes consistant à :

   a) mesurer des spectres de vibration d'une pluralité de composants de référence de différents niveaux de qualité en tant que spectres de référence, dans lequel des lignes de fréquence dans les spectres de référence respectifs et des résultats d'examens d'analyse structurelle sur les composants de référence respectifs sont associés les uns aux autres pour chaque composant de référence,
   b) exciter (102) des vibrations dans un composant à tester,
   c) mesurer (103) des vibrations émises en réaction à l'étape de procédé b) en tant que spectre de vibration, et
   d) comparer (105) des lignes de fréquence issues du spectre de vibration du composant, mesuré selon l'étape de procédé c), avec des lignes de fréquence correspondantes issues des spectres de référence des composants de référence afin d'établir au moins un spectre de référence qui diffère le moins du spectre de vibration du composant en termes d'amplitudes des lignes de fréquence, et afin de classifier le composant concernant la position et/ou la taille des défauts à l'aide des résultats des examens d'analyse structurelle, associés audit au moins un spectre de référence,

   **caractérisé en ce que** pour la comparaison selon l'étape d), les différences respectives des amplitudes de lignes de fréquence correspondant les unes aux autres d'une part du spectre de vibration du composant et d'autre part des spectres de référence des composants de référence sont formées.

2. Procédé selon la revendication 1, **caractérisé par** e) une répétition multiple des étapes de procédé b) à d) selon un nombre de composants à tester dans une série.

3. Procédé selon l'une quelconque des revendications 1 à 2, **caractérisé en ce que** les spectres de vibration sont détectés dans une plage de fréquence qui s'étend jusqu'à environ 80 kHz.

4. Procédé selon l'une quelconque des revendications 1 à 3, **caractérisé en ce que** les lignes de fréquence dans le spectre de vibration respectif sont identifiées à l'aide de leur rapport signal/bruit respectif par rapport au bruit de fond.

5. Procédé selon l'une quelconque des revendications précédentes, **caractérisé en ce que** les examens d'analyse structurelle sur la pluralité de composants de référence sont effectués par tomographie par ordinateur.

6. Procédé selon l'une quelconque des revendications précédentes, **caractérisé en ce que** les spectres de référence mesurés selon l'étape a) de la pluralité de composants de référence sont stockés avec les résultats respectivement associés des examens d'analyse structurelle sous forme de jeux de données de référence dans une base de données de référence.

7. Dispositif en particulier pour effectuer le procédé selon l'une quelconque des revendications précédentes 1 à 6, dans lequel un dispositif de génération d'impulsion (11) pour l'excitation en vibration d'un composant à tester, un dispositif de détection (12) pour détecter des vibrations émises par le composant, et un dispositif de commande et d'évaluation (13) pour analyser et évaluer les vibrations détectées sont prévus, dans lequel le dispositif de commande et d'évaluation (13) accède lors de l'évaluation à une base de données (13‴) avec des jeux de données de référence de composants de référence,

   dans lequel une unité de comparaison (13-1) compare des lignes de fréquence issues du spectre de vibration mesuré du composant avec des lignes de fréquence correspondantes issues des spectres de référence des composants de référence,
   dans lequel une unité de décision (13-2) sélectionne au moins un spectre de référence qui diffère le moins du spectre de vibration du composant en termes d'amplitudes des lignes de fréquence,
   dans lequel une unité d'association (13-3) associe au spectre de référence sélectionné des résultats d'examens d'analyse structurelle du composant de référence correspondant,
   dans lequel une unité de classification (13-4) classifie à l'aide des résultats des examens d'analyse structurelle du composant de référence correspondant, associés au spectre de référence sélectionné, le composant concernant la position et/ou la taille des défauts,
   **caractérisé en ce que** pour la comparaison des différences respectives des amplitudes, des lignes de fréquence qui correspondent les unes aux autres d'une part du spectre de vibration du composant et d'autre part des spectres de référence des composants de référence sont formées.

8. Dispositif selon la revendication 7, **caractérisé en ce que** le dispositif de commande et d'évaluation (13) est en communication avec le dispositif de détection (12) par l'intermédiaire d'une ligne de signal et/ou de données (14).

9. Dispositif selon la revendication 7 ou 8, **caractérisé en ce que** le dispositif de commande et d'évaluation (13) est en communication avec le dispositif de génération d'impulsion (11) par l'intermédiaire d'une ligne de commande (15).

10. Dispositif selon l'une quelconque des revendications 7 à 9, **caractérisé en ce que** le dispositif de détection (12) est réalisé sous forme de microphone.

11. Dispositif selon l'une quelconque des revendications 7 à 10, **caractérisé en ce que** le dispositif de commande et d'évaluation (13) présente un analyseur de spectre (13'') côté entrée.

12. Dispositif selon l'une quelconque des revendications 7 à 11, **caractérisé en ce que** le dispositif de commande et d'évaluation (13) présente un ordinateur de processus (13') dans la zone de mémoire duquel est mise en œuvre la base de données (13''') avec les jeux de données de référence des composants de référence.

# Fig. 1

# Fig. 2

# Fig. 3A

# Fig. 3B

200

101-1

101-2

101-3

101-4

101-5

101-6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10137364 A1
- GB 2254425 A
- DE 102006048791 A1
- US 2015185069 A1